# EUROPÄISCHE PATENTSCHRIFT

(11) **EP 0 606 579 B1**
(45) Veröffentlichungstag und Bekanntmachung des Hinweises auf die Patenterteilung: **23.04.1997**
(21) Anmeldenummer: 93119484.9
(22) Anmeldetag: 03.12.1993
(51) Int. Cl.: H01M 8/24, H01M 8/02, H01M 8/12

(54) **Verwendung einer Zusammensetzung als keramisches Gasanschlussbauteil für Brennstoffzellen mit Zirkonoxid-Festelektrolyt**
Use of a compositon for ceramic gas supplying connected components for fuel with zirconium oxides solid electrolyte.
Utilisation d'une composition pour des éléments de construction d'amenée de gaz en matière céramique pour piles à combustible à électrolyte solide en oxyde de zirconium.

(30) Priorität: 17.12.1992 DE 4242728
(43) Veröffentlichungstag der Anmeldung: 20.07.1994
(60) Teilanmeldung: 95119977.7
(73) Patentinhaber: DORNIER GmbH, D-88090 Immenstaad (DE)
(72) Erfinder: Späh, Richard, Dr.-Phys., D-88662 Überlingen (DE); Schäfer. Wolfgang, Dr.-Phys., D-88048 Friedrichshafen (DE); Stolten, Detlef, Dipl.-Ing., D-88690 Überlingen (DE); Fandel, Marco, Dipl.-Ing., D-88090 Immenstaad (DE)
(74) Vertreter: Landsmann, Ralf, Dipl.-Ing.

(56) Entgegenhaltungen:
- EP-A- 0 338 823
- DE-A- 4 203 245

## Beschreibung

Zirkonoxid-Festelektrolyt-Brennstoffzellen sind elektrochemische Energiewandler, die Strom direkt aus gasförmigen Energieträgern /z.B. H₂, CO, CH₄) erzeugen. Sie basieren auf Zirkonoxid als Sauerstoff-Ionen-leitendem Festelektrolyt und werden bei Temperaturen von ca. 800 bis 1000°C betrieben. Da sie nicht wie Wärmekraftmaschinen der Carnot-Regel unterliegen, erreichen sie deutlich höhere Wirkungsgrade von über 50 %. Deshalb und wegen ihrer geringen Emission von Schadstoffen haben sie ein hohes Potential als zukünftige Energiewandler, speziell wenn sie Erdgas als Primärenergieträger verwenden.

Im Hinblick auf Wirtschaftlichkeit und hohe Energiedichte ist ein planares Zelldesign vorteilhaft. Bei dieser Anordnung sind dünne Festelektrolytplatten beidseitig mit porösen Elektroden beschichtet und diese abwechselnd mit Verbindungselementen übereinander gestapelt, so daß eine bipolare Anordnung entsteht. Mehrere Einzelzellen können seriengeschaltet werden. Diese Zellverbunde (= Zellstacks) werden zu größeren Einheiten mit Hilfe von elektrischen Leitersystemen und Gasleitungen verschaltet.

Die für Brennstoffzellen beschriebenen Anordnungen können auch für den Umkehrprozeß der Hochtemperatur-Elektrolyse verwendet werden, um aus Wasser bei ca. 800 bis 1000°C mit hohem Wirkungsgrad Wasserstoff herzustellen.

Stand der Technik sind bei den (heute bevorzugten) Kreuzstrom-Gasführungen Gasanschlußbauteile aus Zirkonoxid oder Aluminiumoxid. Bei anderen z.B. internen Gasführungen werden zum Teil auch metallische Teile verwendet, die jedoch gegen die Zellen elektrisch isoliert werden müssen. Alle diese Lösungen haben jedoch prinzipielle Nachteile: Im Fall des Zirkonoxid führt dessen Sauerstoffionenleitfähigkeit dazu, daß ein elektrischer Nebenschluß zu den Zellen existiert, der den Wirkungsgrad erniedrigt und sogar zu elektrochemisch bedingten Werkstoffzerstörungen führen kann. Bei der Verwendung von Aluminiumoxid sind aufwendige Konstruktionen zum Ausgleich der nicht angepaßten thermischen Ausdehnung zwischen dem Zellstapel und den Gasanschlußteilen erforderlich, die oft nur zu Lasten der Gasdichtigkeit möglich sind. Im letztgenannten Fall der metallischen Teile sind aufwendige Geometrien zur elektrischen Isolierung der Zellen erforderlich, die hohe Kosten verursachen und die Fertigungs- und Betriebssicherheit verringern.

Als Werkstoffe für Festelektrolyt-Brennstoffzellen werden vorzugsweise verwendet:
- **Elektrolyt:**: ZrO₂ mit CaO-, MgO-, Y₂O₃- oder anderer Seltenerdoxid-Dotierung sowie teilweise auch mit Al₂O₃-Zusatz
- **Brenngaselektrode:**: Metallkeramikverbundwerkstoffe mit Nickel oder Kobalt als metallischer und dotiertem CeO₂ oder ZrO₂ als keramischer Komponente
- **Luftelektrode:**: Dotierte Oxide mit Perowskitstruktur wie z.B. La₁₋ₓ CaₓMnO₃, La₁₋ₓSrₓMnO₃, La₁₋ₓSrₓ Co_{y}Mn_{1-y}O₃
- **Verbindungselement:**: Dotiertes Lanthanchromit wie z.B. La₁₋ₓSrₓ Co_{y}LaMgₓCr₁₋ₓO₃

Aus der **DE 42 03 245 A1** ist ein poröser Träger für eine Feststoffbrennzelle aus dem System MgO/Al₂O₃ bekannt. Die Zusammensetzung wird dabei so gewählt, daß eine gute Anpassung an die thermische Ausdehnung von Yttriumoxid stabilisiertem Zirkonoxid erreicht wird.

Die oben angegebenen Komponenten sind im Zellverbund zu gasdichten Einheiten zusammengefügt.

Um die hohen Anforderungen an die Gasdichtigkeit bei hoher Temperatur und beim Aufheizen sowie Abkühlen zu gewährleisten, sind die thermischen Ausdehnungskoeffizienten sämtlicher Komponenten sehr gut aufeinander abgestimmt.

Den Zellverbunden werden unter definierten Strömungsbedingungen Luft sowie Brenngas zugeführt und die Abgase oder die abgereicherte Luft abgeführt. Hierzu werden gasdichte Gasanschlußbauteile benötigt, an die folgende Aufgaben gestellten werden:
- Die thermische Ausdehnung soll mit den anderen Brennstoffzellenkomponenten, insbesondere dem ZrO₂-Elektrolyt übereinstimmen.
- Hochtemperaturbeständigkeit in Anwesenheit von Luft einerseits sowie Brenngasen wie H₂, CH₄ oder CO andererseits.
- Sie sollen bei Betriebstemperatur elektrisch isolieren, so daß sie keinen Nebenschluß zum Zellverbund darstellen.
- Sie sollen sich zu günstigen Kosten herstellen lassen und mit dem Zellverbund gasdicht verbindbar sein.

Es ist kein Einstoffsystem bekannt, das alle vier Teilaufgaben erfüllt. Es wird deshalb erfindungsgemäß ein Gemisch aus zwei oder mehr keramischen Stoffen verwendet, bei dem einer der Stoffe einen höheren thermischen Ausdehnungskoeffizient als gefordert und der andere einen geringeren als gefordert besitzen. Durch Wahl des Volumenverhältnisses oder daraus abgeleitet des Molverhältnisses kann der thermische Ausdehnungskoeffizient eingestellt werden. Sofern die Stoffe keine Reaktion miteinander eingehen, kann der resultierende Ausdehnungskoeffizient durch das mit den beiden Volumenverhältnissen gewichtete Mittel der Einzelwerte berechnet werden.

Beim Gegenstand der Erfindung wird das Zweistoffsystem MgO-Al₂O₃ in dem Bereich MgO/Al₂O₃ von 1:1 bis 7:1 als elektrisch isolierendes, gasolichtes Gasoenschlußbauteil für Brennstoffzellen mit keramischem Elektrolyt verwendet. Da das Grenzverhältnis 1:1 der Zusammensetzung MgO · Al₂O₃ (oder in anderer Schreibweise MgAl₂O₄) dem Magnesiumspinell entspricht, handelt es sich um einen hinsichtlich MgO überstöchiometrischen Spinell.
Beim MgO/Al₂O₃-Verhältnis 1:1 liegt der thermische Ausdehnungskoeffizient unterhalb von ZrO₂. Da sich bei der Steigerung des MgO-Gehalts der thermische Ausdehnungskoeffizient monoton erhöht, kann über gezielte MgO-Zugabe der Ausdehnungskoeffizient von ZrO₂ exakt eingestellt werden.

Da sowohl MgO·Al₂O₃ (Spinell) als auch MgO hochtemperaturbeständig, elektrisch isolierend, und gegen Reduktion durch die Brenngase beständig sind, trifft dies auch auf die hier beschriebene Mischkeramik zu. Hinsichtlich der Herstell- und Fügetechniken lassen sich ebenfalls die für MgO·Al₂O₃ oder MgO erprobten Verfahren übertragen.

Als Rohstoffe zur Herstellung der Gasanschlußbauteile können MgO- und MgO·Al₂O₃-Pulver verwendet werden, die kommerziell und kostengünstig erhältlich sind. Somit sind alle oben beschriebenen Teilaufgaben gelöst.

Die Erfindung wird nachfolgend anhand von Fig. und eines Ausführungsbeispiels beschrieben.

Es zeigen:

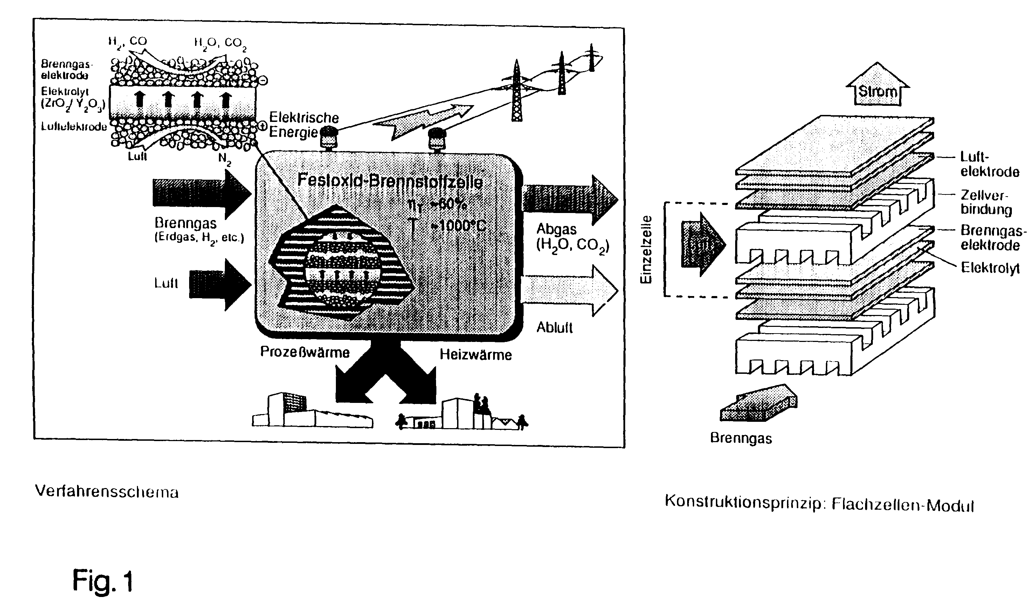

- Fig. 1: seriengeschaltete Einzelzellen einer Brennstoffzelle,

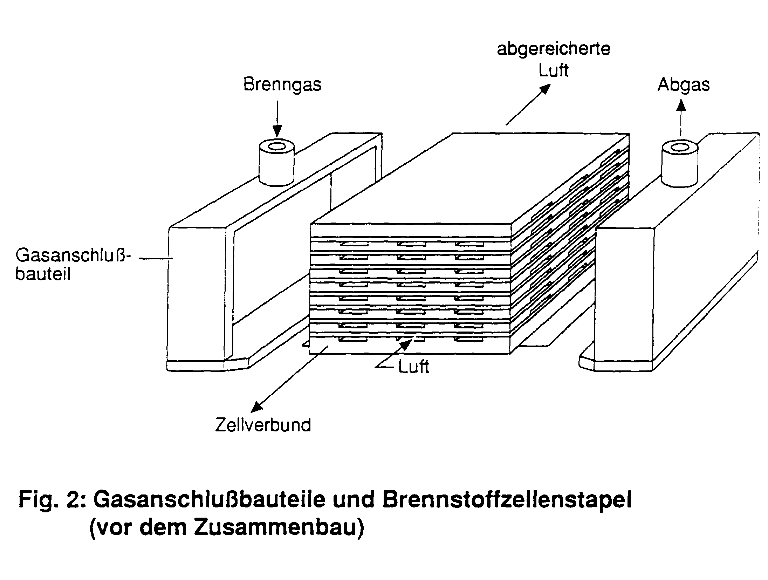

- Fig. 2: ein Ausführungsbeispiel für die Geometrie von Gasanschlußbauteilen,
- Fig. 3: ein Diagramm mit dem Arbeitsbereich in einem erfindungsgemäßen Zweistoffsystem, und
- Fig. 4: ein Diagramm des thermischen Ausdehnungskoeffizienten als Funktion des MgO/Al₂O₃ Molverhältnisses.

Die erfindungsgemäßen Gasanschlußbauteile wurden nach folgendem Verfahren hergestellt:
- Mischen von Pulvern aus MgO und MgO·Al₂O₃
- Isostatisches Pressen bei 2000 bar oder Axialpressen bei 1000 bar
- Sintern an Luft bei 1650°C
- Mechanische Nachbearbeitung

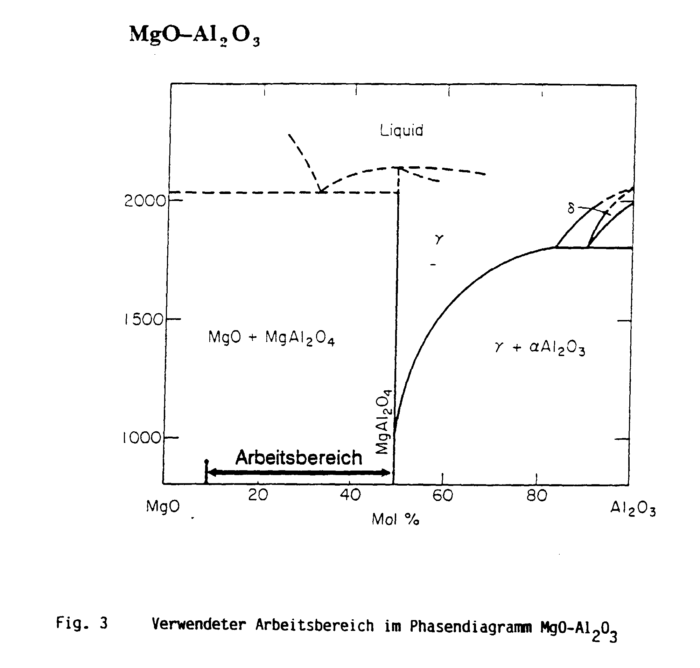

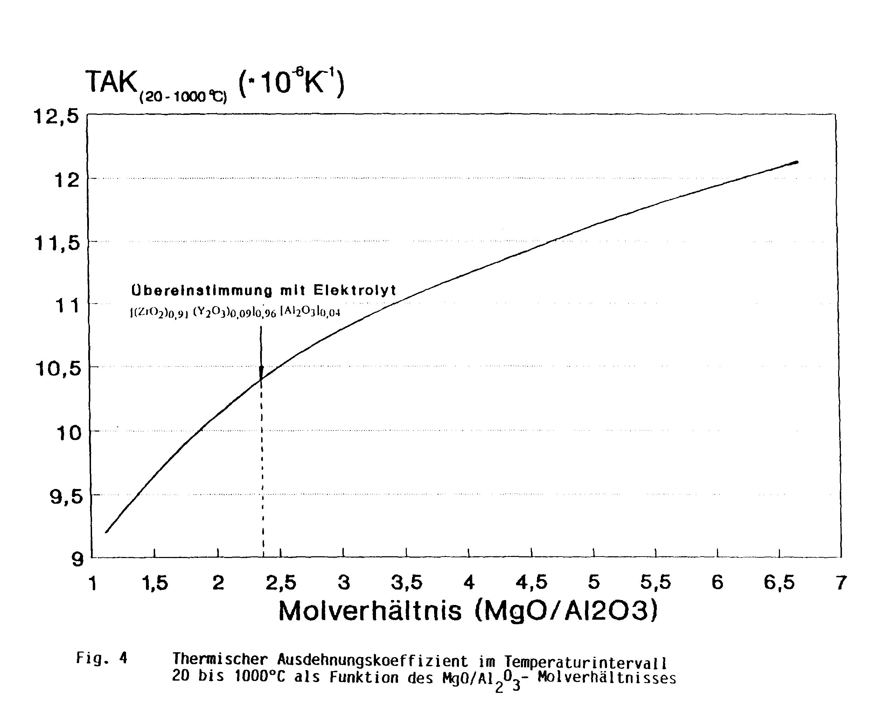

Die Charakterisierung der Proben und Teile umfaßte die Messung des thermischen Ausdehnungskoeffizienten, des elektrischen Widerstands, Fügeversuche mit Brennstoffzellen sowie Betriebsversuche im Brennstoffzellenbetrieb. Der thermische Ausdehnungskoeffizient wurde für MgO/Al₂O₃ im Bereich zwischen 1:1 bis 7:1 (Fig. 3) untersucht. Die Abhängigkeit ist in Fig. 4 dargestellt. Ein identischer Ausdehnungskoeffizient zum Elektrolytmaterial [(ZrO₂)_{0,91}(Y₂O₃)_{0,09}]_{0,96}[Al₂O₃]_{0,04} ergibt sich für MgO/Al₂O₃ = 2,35

Als spezifischer elektrischer Widerstand wurde 1,5 · 10⁶ Ω cm bei 1000°C gemessen. Gasdichte Verbindungen mit Brennstoffzellen wurden durch Fügen oder Lote auf SiO₂-Basis bei Temperaturen von rund 1200°C hergestellt. Betriebsversuche mit kompletten Brennstoffzellen verliefen erfolgreich.

## Patentansprüche

1. Verwendung einer Zusammensetzung aus dem Stoffsystem MgO-Al₂O₃, bei der das Molverhältnis MgO/Al₂O₃ zwischen 1:1 und 7:1 beträgt als elektrisch isolierendes, gasdichtes Gasanschlußbauteil für Brennstoffzellen mit keramischem Elektrolyt.

2. Verwendung nach Anspruch 1, **dadurch gekennzeichnet**, daß über das MgO/Al₂O₃-Verhältnis der thermische Ausdehnungskoeffizient von 20°C bis 1000°C zwischen 9 · 10⁻⁶K⁻¹ und 12,6 · 10⁻⁶K⁻¹ eingestellt werden kann.

3. Verwendung nach einem der Ansprüche 1 und 2, **dadurch gekennzeichnet,** daß der thermische Ausdehnungskoeffizient zwischen 20°C und 1000°C durch Wahl des MgO/Al₂O₃-Verhältnisses auf ± 10⁻⁷K⁻¹ an den keramischen Festelektrolyt angepaßt wird.

4. Verwendung nach einem der Ansprüche 1 bis 3, **dadurch gekennzeichnet,** daß die Bauteile in Kombination mit einem Festelektrolyt der Zusammensetzung
[(ZrO₂)₁₋ₓ(Y₂O₃)ₓ]_{1-y}(Al₂O₃)_{y} mit 0,03 ≤ x ≤ 0,2 und O ≤ y ≤ 0,25 verwendet werden, wobei über den Parameter y dessen thermischer Ausdehnungskoeffizient variiert werden kann.

5. Verwendung nach einem der Ansprüche 1 bis 4, **dadurch gekennzeichnet,** daß die Bauteile mittels eines Lotes aus Glas, Keramik, Glaskeramik oder Metall gasdicht mit dem Brennstofzellen-Stapel verbunden werden.

6. Verwendung nach einem der Ansprüche 1 bis 5, **dadurch gekennzeichnet**, daß die Bauteile für Elektrolysezellen mit keramischem Festelektrolyt statt für Brennstoffzellen verwendet werden.

7. Verwendung nach einem der Ansprüche 1 bis 6, **dadurch gekennzeichnet**, daß die Bauteile neben MgO und Al₂O₃ noch eines oder mehrere der folgenden Oxide FeO, Fe₂O₃, Zr₂, SiO₂, CaO, SrO, Na₂O, K₂O, TiO₂, Cr₂O₃ in einer Konzentration bis 3 mol% enthalten.

8. Verwendung nach einem der Ansprüche 1 bis 7, **dadurch gekennzeichnet,** daß der spezifische elektrische Widerstand der Bauteile bei 1000°C mindestens 5 · 10⁵ Ω cm beträgt.

## Claims

1. Use of a composition comprising the component system MgO-Al₂O₃, wherein the molar ratio MgO/Al₂O₃ is between 1:1 and 7:1, as an electrically insulating, gas-tight gas connection component for fuel cells having a ceramic electrolyte.

2. Use according to Claim 1, characterised in that the thermal expansion coefficient in the range of from 20°C to 1000°C can be adjusted to between 9·10⁻⁶K⁻¹ and 12.6·10⁻⁶K⁻¹ by varying the MgO/Al₂O₃ ratio.

3. Use according to either Claim 1 or Claim 2, characterised in that the thermal expansion coefficient between 20°C and 1000°C can be adapted to the ceramic solid electrolyte by selecting the MgO/Al₂O₃ ratio at ± 10⁻⁷K⁻¹.

4. Use according to any one of Claims I to 3, characterised in that the components are used in combination with a solid electrolyte having the composition
[(ZrO₂)₁₋ₓ(Y₂O₃)ₓ]_{1-y}(Al₂O₃)_{y} where 0.03≤x≤0.2 and 0≤y≤0.25, it being possible to vary the thermal expansion coefficient thereof by means of the parameter y.

5. Use according to any one of Claims 1 to 4, characterised in that the components can be connected in a gas-tight manner to the fuel cell stack by means of a solder of glass, ceramic material, glass ceramic material or metal.

6. Use according to any one of Claims 1 to 5, characterised in that the components are used for electrolysis cells having a ceramic solid electrolyte instead of for fuel cells.

7. Use according to any one of Claims 1 to 6, characterised in that the components contain, in addition to MgO and Al₂O₃, one or more of the following oxides FeO, Fe₂O₃, ZrO₂, SiO₂, CaO, SrO, Na₂O, K₂O, TiO₂, Cr₂O₃ in a concentration of up to 3 mole %.

8. Use according to any one of Claims 1 to 7, characterised in that the specific electrical resistance of the components at 1000°C is at least 5.10⁵ Ω cm.

## Revendications

1. Utilisation d'une composition du système MgO-Al₂O₃, pour laquelle le rapport molaire MgO/Al₂O₃ est compris entre 1:1 et 7:1, en tant qu'élément de structure d'amenée de gaz, isolé électriquement et étanche aux gaz pour des piles à combustible à électrolyte céramique.

2. Utilisation selon la revendication 1, caractérisée en ce que le coefficient de dilatation thermique, compris peut être réglé de 20°C à 1000°C, entre 9 · 10⁻⁶K⁻¹ et 12,6 · 10⁻⁶K⁻¹ par l'intermédiaire du rapport MgO/Al₂O₃.

3. Utilisation selon l'une des revendications 1 et 2, caractérisée en ce que le coefficient de dilatation thermique, de 20°C à 1000°C, peut être adapté à l'électrolyte solide céramique en sélectionnant le rapport MgO/Al₂O₃ à la valeur de ± 10⁻⁷K⁻¹.

4. Utilisation selon l'une des revendications 1 à 3, caractérisée en ce que les éléments de structure peuvent être utilisés en combinaison avec un électrolyte solide de composition [(ZrO₂)₁₋ₓ(Y₂O₃)ₓ]_{1-y}(Al₂O₃)_{y} avec 0,03≤x≤0,2 et O≤y≤0,25, dont le coefficient de dilatation thermique peut varier par l'intermédiaire du paramètre y.

5. Utilisation selon l'une des revendications 1 à 4, caractérisée en ce que les éléments de structure sont reliés au moyen d'une brasure en verre, en céramique, en vitrocéramique ou en métal, de manière étanche au gaz, à l'empilement de piles à combustible.

6. Utilisation selon l'une des revendications 1 à 5, caractérisée en ce que les éléments de structure peuvent être utilisés pour des cellules d'électrolyse comprenant un électrolyte solide céramique au lieu d'être utilisés pour des piles à combustible.

7. Utilisation selon l'une des revendications 1 à 6, caractérisée en ce que les éléments de structure contiennent, outre de MgO et Al₂O₃, également un ou plusieurs des oxydes suivants FeO, Fe₂O₃, ZrO₂, SiO₂, CaO, SrO, Na₂O, TiO₂, TiO₂, Cr₂O₃ en une concentration molaire atteignant 3 %.

8. Utilisation selon l'une des revendications 1 à 7, caractériséee en ce que la résistance électrique spécifique des éléments de structure à 1000°C est d'au moins 5 · 10⁵Ω cm.
